# FASCICULE DE BREVET EUROPEEN

(11) **EP 1 469 183 B1**
(45) Date de publication et mention de la délivrance du brevet: **20.06.2007**
(21) Numéro de dépôt: 04300205.4
(22) Date de dépôt: 14.04.2004
(51) Int. Cl.: F02D 41/20, H01L 41/04

(54) **Dispositif de commande d'actuateur piézo-électrique ultrasonore et son procédé de mise en oeuvre**
Steuervorrichtung für einen piezoelektrischen Ultraschallaktuator sowie Betriebsverfahren
Control device for an ultrasonic piezoelectric actuator and operation method thereof

(30) Priorité: 15.04.2003 FR 0304706
(43) Date de publication de la demande: 20.10.2004
(73) Titulaire: Renault s.a.s., 92100 Boulogne Billancourt (FR)
(72) Inventeur: Ripoll, Christophe, 78220 Viroflay (FR)

(56) Documents cités:
- DE-A- 19 632 872
- DE-A- 19 827 170
- FR-A- 2 767 355

## Description

La présente invention concerne un dispositif de commande d'un actuateur piézo-électrique ultrasonore piloté électriquement, et plus particulièrement d'un injecteur de carburant à étage piézo-électrique piloté par le calculateur d'injection électrique d'un moteur à combustion interne dans un véhicule automobile. Elle concerne de plus un procédé de mise en oeuvre du dispositif.

Plus précisément, le problème que vise à résoudre l'invention est l'excitation des cellules piézo-électriques pour faire vibrer la structure d'un injecteur ultrasonore, telle que décrite dans la demande de brevet français, déposée sous le numéro 99 14548 au nom de la Demanderesse. Ce type d'injecteur pulvérise très finement le carburant en gouttelettes calibrées pour assurer un dosage précis et suffisamment petites pour assurer la vaporisation complète et homogène du carburant injecté. Un tel injecteur ultrasonore comporte entre autres une buse cylindrique alimentée en carburant et à l'extrémité de laquelle est ménagé un orifice d'injection, et des moyens de mise en vibration cyclique de la buse, tel un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente au premier ordre à une capacité dont la tension de chargement est élevée, supérieure à une centaine de volts.

Dans un véhicule automobile, la tension d'alimentation a pour valeur 12 ou 42 volts, ce qui implique d'augmenter cette tension pour assurer la charge et la décharge de la céramique.

Il existe actuellement différentes topologies de dispositifs de commande pour injecteur piézo-électrique, dont les topologies à transformateur qui ont pour inconvénients d'être chères à réaliser et de présenter un couplage de la résonance électrique avec la résonance magnétique. Il existe également des topologies sans transformateur, donc sans isolation galvanique, dont un exemple de réalisation est décrit dans la demande de brevet français, déposée sous le numéro 02 14665, au nom de Renault. Cette demande propose un dispositif de commande qui comporte :
- un premier étage, alimenté par la source de tension continue, d'amplification de ladite tension pour générer une haute tension ;
- un deuxième étage, alimenté par la haute tension générée par le premier étage, de génération d'une source de courant pour alimenter les injecteurs ;
- un troisième étage de sélection des injecteurs piézo-électriques à piloter ;
- un quatrième étage de pilotage de la tension d'excitation Vₚᵢ des injecteurs.

Le premier étage de génération d'une haute tension est constitué par une première branche comprenant une première inductance L₁ reliée à un interrupteur S₁ de découpage, monté en anti-parallèle avec une diode d₁ de roue libre, et par une deuxième branche montée en parallèle sur l'interrupteur S₁ de découpage et comprenant une diode D reliée à une capacité de filtrage C, une des bornes de ladite diode D étant reliée au point de jonction J₁ de l'inductance L₁ et de l'interrupteur S₁ de la première branche, la haute tension d'alimentation étant délivrée aux bornes de la capacité C.

Quant au deuxième étage de génération d'une source de courant, il est constitué par une branche comprenant une seconde inductance L₂ reliée à un interrupteur S₂ de découpage monté en anti-parallèle avec une diode d₂ de roue libre, ladite inductance L₂ de valeur déterminée pour réaliser un circuit oscillant avec chaque injecteur piloté étant reliée d'un côté au point de jonction J₂ de la diode D avec la capacité de filtrage du premier étage et de l'autre côté à l'interrupteur S₂

Le document DE 196 32 872 A1 décrit un dispositif de commande comportant une source de tension continue, une inductance de résonance en série avec un ensemble de deux branches en parallèle, comprenant chacune un premier interrupteur de type thyristor, les deux interrupteurs étant montés tête-bêche, reliées par un point de jonction à une diode monté en anti-parallèle avec l'actuateur piézo-électrique, et un deuxième interrupteur de type thyristor monté en parallèle avec l'ensemble de deux branches.

Le document DE 198 27 170 A1 propose un dispositif de commande qui comporte une source de tension continue, une inductance de résonance en série avec un ensemble de deux branches en parallèle, comprenant chacune un premier interrupteur en série avec une diode respectivement, les deux diodes étant montées tête-bêche, reliées par un point de jonction à une diode monté en anti-parallèle avec l'actuateur piézo-électrique.

Le but de l'invention est de proposer une nouvelle topologie sans transformateur, simplifiée par rapport à l'art antérieur, n'ayant qu'un seul élément selfique pour générer une tension alternative aux bornes d'un injecteur à partir d'une source de tension continue.

Pour cela, un premier objet de l'invention est un dispositif de commande d'au moins un actuateur piézo-électrique ultrasonore, piloté électroniquement à partir d'un calculateur de contrôle et d'une source de tension continue, le dispositif étant alimenté par la source de tension délivrant une tension de sortie continue E entre deux bornes extrêmes B₊ et B₋, et comportant, connectée en parallèle auxdites bornes, une inductance de résonance Lₚ en série avec un ensemble de deux branches en parallèle, comprenant chacune un premier interrupteur P₁₁ et P₁₂ en série avec une diode d₁ et d₂ respectivement, les deux diodes étant montées tête-bêche, relié par un point de jonction J a l'actuateur Aᵢ, **caractérisé en ce qu**' un second interrupteur P₂ monté en anti-parallèle avec une diode D et délivrant à ses bornes une haute tension alternative à composante continue servant de tension d'excitation est monté en parallèle à l'actuateur.

Selon une autre caractéristique du dispositif de commande alimenté par la source de tension continue, l'inductance de résonance Lp est montée en série entre la borne B+ de la source de tension et l'ensemble des deux branches, lui-même relié par le point de jonction J à une première borne du second interrupteur P₂ monté en anti-parallèle avec une diode D dont l'autre borne est reliée à ta borne B- de la source de tension, l'actuateur étant monté en parallèle entre le point de jonction J et la borne B-de la source.

Selon une autre caractéristique du dispositif de commande alimenté par la source de tension continue, l'inductance de résonance Lₚ est montée en série entre la borne B+ de la source de tension et une première borne du second interrupteur P₂ monté en anti-parallèle avec la diode D, dont la seconde borne est reliée par le point de jonction J à une première borne de l'ensemble des deux branches dont l'autre borne est reliée à la borne B- de la source de tension, l'actuateur étant monté en parallèle entre le point de jonction entre l'inductance Lₚ et l'interrupteur d'une part et le point de jonction J d'autre part.

Un second objet de l'invention est un procédé de mise en oeuvre du dispositif de commande d'au moins un actuateur piézo-électrique ultrasonore, caractérisé en ce qu'il comporte les étapes suivantes :
- A) fermeture simultanée d'un premier interrupteur P₁₁ d'une branche de l'ensemble relié à l'inductance de résonance Lₚ d'une part et du second interrupteur P₂ destiné à délivrer la tension d'excitation à l'injecteur d'autre part pour que le courant I_{LP} circule dans l'inductance et que l'énergie s'accumule dans celle-ci, alors que l'autre premier interrupteur P₁₂ de l'autre branche est ouvert ;
- B) ouverture du second interrupteur P₂, alors que le premier interrupteur P₁₁ d'une branche est toujours fermé et celui P₁₂ de l'autre branche est toujours ouvert, afin que le courant I_{LP} dans l'inductance passe dans l'actuateur Aᵢ sélectionné et que l'inductance Lₚ entre en résonance avec la capacité d'entrée de l'actuateur qui va ainsi se charger à la tension d'excitation Vₚᵢ existant aux bornes de l'interrupteur P₂;
- C) ouverture du premier interrupteur P₁₁ de la branche qui était fermé et fermeture simultanée de l'interrupteur P₁₂ de l'autre branche, alors que le second interrupteur P₂ reste ouvert, pour décharger l'actuateur piézo-électrique dans l'inductance Lₚ, dont le courant I_{Lp} croît dans le sens opposé au courant de charge;
- D) fermeture du second interrupteur P₂, alors que l'un des premiers interrupteurs des branches P₁₁ est ouvert et l'autre interrupteur P₁₂ est fermé ;
- E) ouverture de l'interrupteur P₁₂ fermé et fermeture de l'autre interrupteur P₁₁ ouvert des deux branches pour accumuler de l'énergie dans l'inductance Lₚ.

D'autres caractéristiques et avantages de l'invention apparaîtront à la lecture de la description de deux variantes de réalisation d'un dispositif de commande d'un actuateur piézo-électrique, illustré par les figures suivantes qui sont :
- les figures 1 et 2 : un schéma électronique d'un dispositif de commande d'un actuateur piézo-électrique selon deux variantes ;
- les figures 3ₐ à 3_{d} : les schémas équivalents au circuit de charge et décharge de l'injecteur sélectionné ;
- les figures 4ₐ à 4_{c} : les signaux de commande des trois interrupteurs du dispositif ;
- les figures 5 et 6 : les variations temporelles respectives du courant dans l'inductance de charge et de la tension aux bornes de l'injecteur.

Les éléments portant les mêmes références sur les différentes figures remplissent les mêmes fonctions en vue des mêmes résultats.

L'invention consiste à générer un signal sinusoïdal haute tension, supérieure à une centaine de volts, et haute fréquence, supérieure à une dizaine de kilohertz, sur la cellule piézo-électrique de chaque injecteur de carburant d'un véhicule à partir d'une source de tension continue, soit la batterie. Pour cela, elle propose deux variantes différentes d'une topologie de dispositif de commande d'un actuateur assurant l'excitation desdites céramiques piézo-électriques, à travers une inductance pour constituer un circuit résonant. Ces structures sont valables de 1 à N injecteurs, N étant un entier préférentiellement égal à 4, 5, 6, 8, 10 ou 12. A titre d'exemple non limitatif, le nombre d'injecteurs commandés est 4 dans la description suivante.

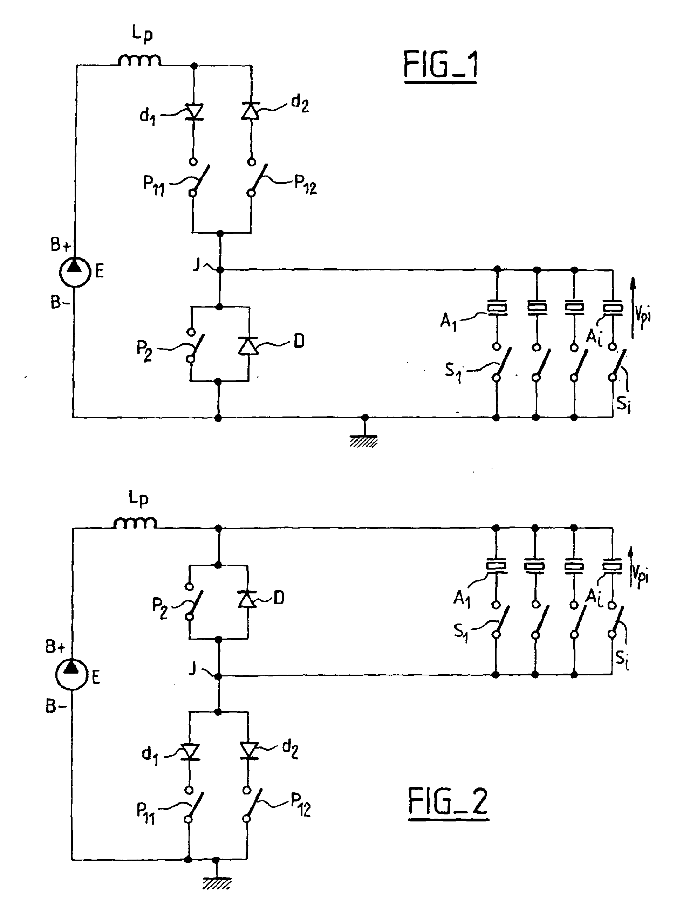

Comme le montre le schéma de la figure 1, concernant une première variante de réalisation, le dispositif de commande d'un actuateur piézo-électrique Aᵢ selon l'invention est alimenté par une source de tension continue, telle qu'une batterie électrique 12 Volts ou 42 Volts du véhicule, ou un convertisseur DC-DC, qui délivre une tension continue E entre ses deux bornes extrêmes B- et B+. En parallèle à cette source de tension continue est connectée une inductance de résonance Lₚ en série avec un ensemble de deux branches en parallèle qui comprennent chacune un premier interrupteur P₁₁ et P₁₂ en série avec une diode d₁ et d₂ respectivement, ces diodes étant montées tête-bêche l'une par rapport à l'autre. Le point de jonction J de ces deux branches, qui n'est pas relié à l'inductance Lₚ, est relié à une première borne d'un second interrupteur P₂, monté en anti-parallèle avec une diode D, et dont la seconde borne est reliée à la borne B- de la source de tension E.

Au moins un actuateur Aᵢ est monté entre les bornes dudit second interrupteur P₂ qui délivre une haute tension alternative d'excitation Vₚᵢ avec une composante continue.

Dans le cas de quatre actuateurs piézo-électriques ultrasonores A₁ à A₄, ils sont montés en parallèle aux bornes de cet interrupteur P₂ en anti-parallèle avec la diode D, chacun étant relié à un interrupteur de sélection S₁ à S₄ piloté par le calculateur électronique de contrôle moteur qui choisit l'injecteur à exciter pour qu'il injecte le carburant dans le cylindre déterminé.

L'inductance de résonance Lₚ est dimensionnée pour que sa fréquence de résonance avec la capacité d'entrée de l'actuateur piézo-électrique soit supérieure à la fréquence de récurrence des interrupteurs, soit la fréquence de pilotage ultrasonique des injecteurs piézo-électriques. Ainsi, le principe de fonctionnement du dispositif repose à la fois sur le caractère réactif de l'inductance Lₚ et de l'impédance d'entrée de l'actuateur sélectionné, ainsi que sur la charge et la décharge rapides du piézo-électrique par une inductance dimensionnée pour que sa résonance avec la capacité d'entrée de l'injecteur ait lieu à une fréquence plus grande que la fréquence de répétition du motif en tension désirée.

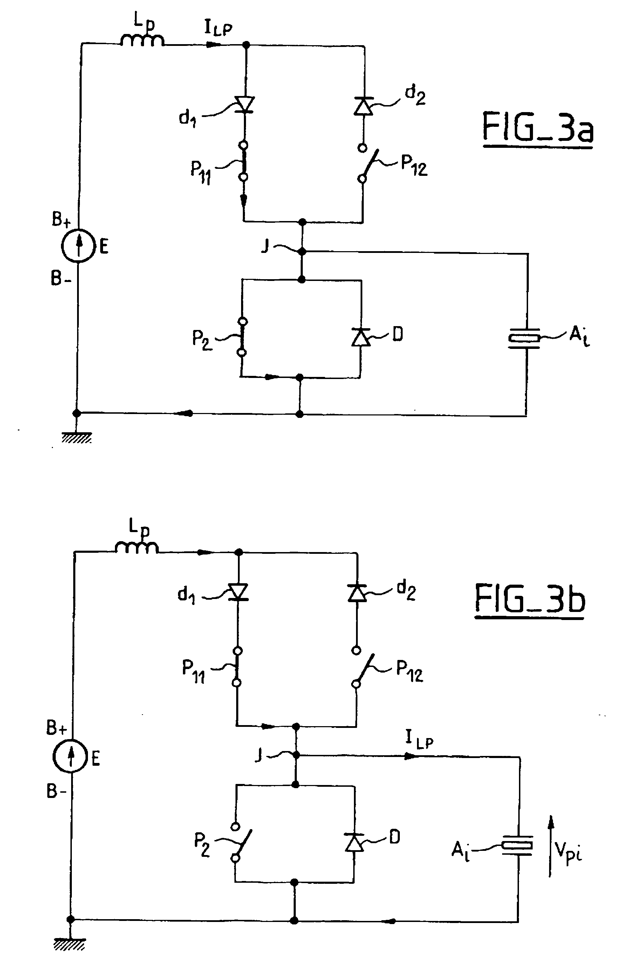

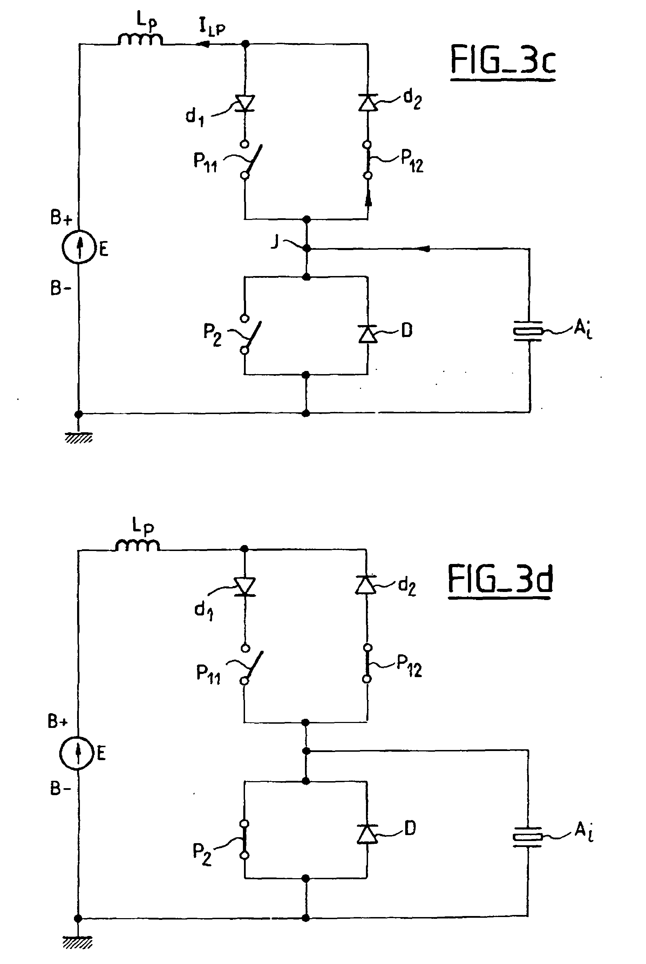

Le fonctionnement de ce dispositif de commande, pour obtenir une tension alternative avec composante continue aux bornes de l'injecteur piézo-électrique, comporte les étapes suivantes, une fois l'injecteur choisi par l'interrupteur de sélection Sᵢ, étapes représentées par les schémas du circuit de charge et de décharge de l'injecteur :
- A) fermeture simultanée d'un premier interrupteur P₁₁ d'une branche de l'ensemble relié à l'inductance de résonance Lₚ d'une part et du second interrupteur P₂ destiné à délivrer la tension d'excitation à l'injecteur d'autre part pour que le courant I_{LP} circule dans l'inductance et que l'énergie s'accumule dans celle-ci, alors que l'autre premier interrupteur P₁₂ de l'autre branche est ouvert (figure 3ₐ);
- B) ouverture du second interrupteur P₂, alors que le premier interrupteur P₁₁ d'une branche est toujours fermé et celui P₁₂ de l'autre branche est toujours ouvert, afin que le courant I_{LP} dans l'inductance passe dans l'actuateur Aᵢ sélectionné et que l'inductance Lₚ entre en résonance avec la capacité d'entrée de l'actuateur qui va ainsi se charger à la tension d'excitation Vₚᵢ existant aux bornes de l'interrupteur P₂ (figure 3_{b}) ;
- C) ouverture du premier interrupteur P₁₁ de la branche qui était fermé jusque là et fermeture simultanée de l'interrupteur P₁₂ de l'autre branche, alors que le second interrupteur P₂ reste ouvert, pour décharger l'actuateur piézo-électrique dans l'inductance Lₚ, dont le courant I_{Lp} croît dans le sens opposé au courant de charge (figure 3_{c}) ;
- D) fermeture du second interrupteur P₂, alors que l'un des premiers interrupteurs des branches P₁₁ est ouvert et l'autre interrupteur P₁₂ est fermé (figure 3_{d}) ;
- E) ouverture de l'interrupteur P₁₂ fermé et fermeture de l'autre interrupteur P₁₁ ouvert des deux branches pour accumuler de l'énergie dans l'inductance Lₚ (comme dans l'étape A).

Le cycle se répète jusqu'à la sélection d'un autre actuateur, pour lequel le cycle sera le même.

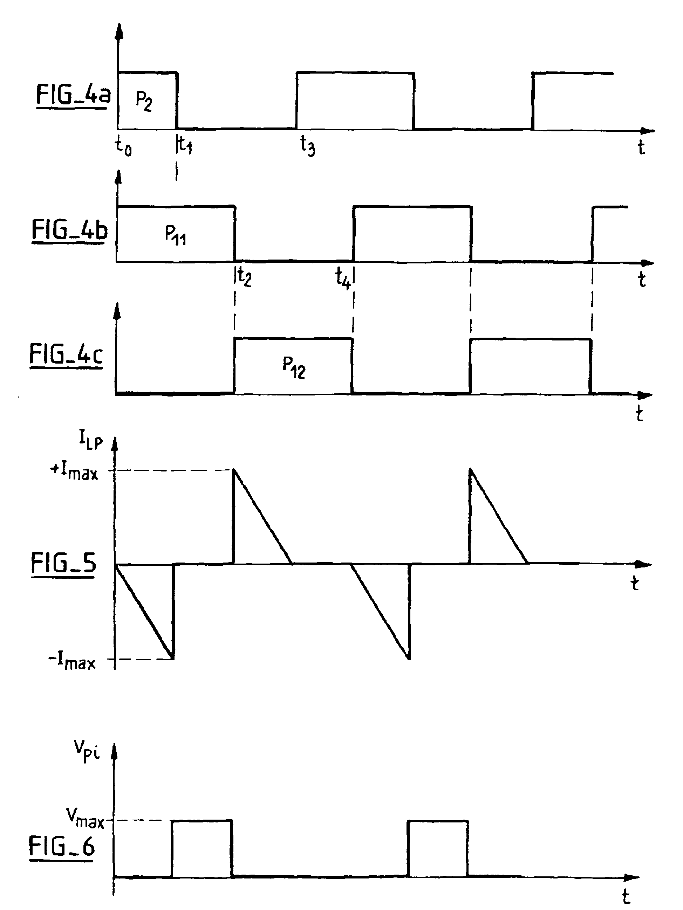

La figure 4ₐ représente les signaux de commande du second interrupteur P₂ en anti-parallèle avec la diode D et les figures 4_{b} et 4_{c} représentent les signaux de commande d'ouverture et de fermeture respectivement des premiers interrupteurs P₁₁ et P₁₂ des deux branches en parallèle.

Le pilotage de ces trois interrupteurs aboutit au courant I_{LP} circulant dans l'inductance Lₚ de résonance, représenté sur la figure 5, ainsi qu'à la tension Vₚᵢ d'excitation de l'actuateur piézo-électrique représentée sur la figure 6 .

Entre les instants t₀ et t₁, lors de l'étape A), le courant I_{LP} croît en valeur absolue dans l'inductance Lₚ jusqu'à une valeur maximale -Iₘₐₓ de charge de l'inductance puis chute brutalement à la valeur nulle à l'instant t₁ de début de décharge de l'inductance dans l'actuateur Aᵢ. Simultanément, l'interrupteur P₂ étant ouvert, la tension Vₚᵢ est nulle aux bornes de l'actuateur mais à l'instant t₁ elle passe à la valeur Vₘₐₓ destinée à l'exciter. A l'instant t₂, l'interrupteur P₁₂ est fermé, la tension d'excitation Vₚᵢ devient nulle et l'actuateur Aᵢ se décharge dans l'inductance Lₚ, créant un courant I_{LP} dans l'inductance, de sens contraire au courant de charge et de valeur maximale +Iₘₐₓ pendant l'étape D). Entre t₃ et t₄, la tension Vₚᵢ est nulle car l'interrupteur P₂ est fermé.

Selon une seconde variante de réalisation, comme le montre le schéma de la figure 2, l'inductance Lₚ est montée en série entre la borne B+ de la source de tension E et une première borne du second interrupteur P₂ monté en anti-parallèle avec la diode D, aux bornes duquel est obtenue la tension d'excitation de l'actuateur sélectionné. La seconde borne est reliée par le point de jonction J à une première borne de l'ensemble des deux branches dont l'autre borne est reliée à la borne B- de la source de tension. L'actuateur A; est monté en parallèle entre le point de jonction J et le point reliant l'inductance Lₚ et l'interrupteur P₂.

Plus précisément, le schéma de la figure 2 représente un dispositif de commande de quatre actuateurs en céramique piézo-électrique A₁ à A₄ montés en parallèle aux bornes de l'interrupteur P₂, chaque actuateur piézo-électrique A₁, à A₄ étant relié en série avec un interrupteur de sélection S₁ à S₄, piloté par le calculateur de contrôle moteur qui sélectionne l'injecteur piézo-électrique à exciter.

Les interrupteurs des deux branches peuvent être du type MOSFET avec diode intrinsèque ou du IGBT ou de type transistor.

Le fonctionnement de ce dispositif de commande selon la seconde variante, pour obtenir une tension alternative avec composante continue aux bornes de l'injecteur piézo-électrique, comporte les mêmes étapes que celui du dispositif selon la première variante.

L'un des avantages de l'invention est de proposer une topologie de commande d'injecteurs piézo-électriques qui utilise un nombre réduit de composants selfiques, en l'occurrence une seule inductance qui permet la charge et la décharge rapides des rondelles piézo-électriques par rapport à la fréquence de répétition de la commande.

## Revendications

1. Dispositif de commande d'au moins un actuateur piézo-électrique ultrasonore, piloté électroniquement à partir d'un calculateur de contrôle et d'une source de tension continue, le dispositif étant alimenté par la source de tension, délivrant une tension de sortie continue (E) entre deux bornes extrêmes (B-, B+), et comportant, connectée en parallèle auxdites bornes, une inductance de résonance (Lₚ) en série avec un ensemble de deux branches en parallèle, comprenant chacune un premier interrupteur (P₁₁ et P₁₂) en série avec une diode (d₁ et d₂) respectivement, les deux diodes étant montées tête-bêche, relié par un point de jonction (J) à l'actuateur (Aᵢ), **caractérisé en ce qu'** un second interrupteur (P₂) monté en anti-parallèle avec une diode (D) et délivrant à ses bornes une haute tension alternative à composante continue servant de tension d'excitation est monté en parallèle à l'actuateur.

2. Dispositif de commande d'au moins un actuateur piézo-électrique ultrasonore selon la revendication 1, **caractérisé en ce que** l'inductance de résonance (Lₚ) est montée en série entre la borne (B+) de la source de tension (E) et l'ensemble des deux branches, lui-même relié par le point de jonction (J) à une première borne du second interrupteur (P₂) monté en anti-parallèle avec une diode (D) dont l'autre borne est reliée à la borne (B-) de la source de tension, l'actuateur étant monté en parallèle entre le point de jonction (J) et la borne (B-) de la source.

3. Dispositif de commande d'au moins un actuateur piézo-électrique ultrasonore selon la revendication 1, **caractérisé en ce que** l'inductance de résonance (Lₚ) est montée en série entre la borne (B+) de la source de tension et une première borne du second interrupteur (P₂) monté en anti-parallèle avec la diode (D), dont la seconde borne est reliée par le point de jonction (J) à une première borne de l'ensemble des deux branches dont l'autre borne est reliée à la borne (B-) de la source de tension, l'actuateur étant monté en parallèle entre le point de jonction entre l'inductance (Lₚ) et l'interrupteur d'une part et le point de jonction (J) d'autre part.

4. Dispositif de commande d'au moins un actuateur piézo-électrique ultrasonore, selon l'une des revendications 1, 2 ou 3, **caractérisé en ce que** l'inductance de résonance (Lₚ) est dimensionnée pour que sa fréquence de résonance avec la capacité d'entrée de l'actuateur piézo-électrique (Aᵢ) soit supérieure à la fréquence de récurrence des interrupteurs, soit la fréquence de pilotage ultrasonique des injecteurs piézo-électriques.

5. Dispositif de commande d'au moins un actuateur piézo-électrique ultrasonore, selon l'une des revendications 1 à 4, **caractérisé en ce que**, pour la commande de quatre actuateurs en céramique piézo-électrique (A₁ à A₄), ceux-ci sont montés en parallèle aux bornes du second interrupteur (P₂) en anti-parallèle avec la diode (D), chacun étant relié à un interrupteur de sélection (S₁ à S₄) piloté par le calculateur électronique de contrôle moteur qui choisit l'injecteur à exciter pour qu'il injecte le carburant dans le cylindre déterminé.

6. Dispositif de commande d'au moins un actuateur piézo-électrique ultrasonore selon l'une des revendications précédentes, **caractérisé en ce que** la source de tension continue est une batterie basse tension 12 ou 42 Volts ou un alternateur.

7. Dispositif de commande d'au moins un actuateur piézo-électrique ultrasonore selon l'une des revendications précédentes, **caractérisé en ce que** l'interrupteur (P₂) délivrant une tension d'excitation (Vₚᵢ) à l'actuateur connecté à ses bornes est du type MOSFET avec diode intrinsèque ou du type IGBT ou transistor.

8. Procédé de mise en oeuvre d'un dispositif de commande d'au moins un actuateur piézo-électrique ultrasonore, selon les revendications 1 à 6, **caractérisé en ce que**, pour obtenir une tension alternative avec composante continue aux bornes de l'injecteur piézo-électrique, le calculateur de contrôle réalise les étapes suivantes :
- A) fermeture simultanée d'un premier interrupteur (P₁₁) d'une branche de l'ensemble relié à l'inductance de résonance (Lₚ) d'une part et du second interrupteur (P₂) destiné à délivrer la tension d'excitation à l'injecteur d'autre part pour que le courant (I_{LP}) circule dans l'inductance et que l'énergie s'accumule dans celle-ci, alors que l'autre premier interrupteur (P₁₂) de l'autre branche est ouvert ;
- B) ouverture du second interrupteur (P₂), alors que le premier interrupteur (P₁₁) d'une branche est toujours fermé et celui (P₁₂) de l'autre branche est toujours ouvert, afin que le courant (I_{LP}) dans l'inductance passe dans l'actuateur (Aᵢ) sélectionné et que l'inductance (Lₚ) entre en résonance avec la capacité d'entrée de l'actuateur qui va ainsi se charger à la tension d'excitation (Vₚᵢ) existant aux bornes de l'interrupteur (P₂) ;
- C) ouverture du premier interrupteur (P₁₁) de la branche qui était fermé et fermeture simultanée de l'interrupteur (P₁₂) de l'autre branche, alors que le second interrupteur (P₂) reste ouvert, pour décharger l'actuateur piézo-électrique dans l'inductance (Lₚ), dont le courant (l_{Lp}) croît dans le sens opposé au courant de charge ;
- D) fermeture du second interrupteur (P₂), alors que l'un des premiers interrupteurs des branches (P₁₁) est ouvert et l'autre interrupteur (P₁₂) est fermé ;
- E) ouverture de l'interrupteur (P₁₂) fermé et fermeture de l'autre interrupteur (P₁₁) ouvert des deux branches pour accumuler de l'énergie dans l'inductance (Lₚ).

## Claims

1. Device for controlling at least one ultrasound piezo-electric actuator, electronically controlled from a control computer and a DC voltage source, the device being powered by the voltage source delivering a DC output voltage (E) between two extreme terminals (B-, B+), and comprising, connected in parallel to said terminals, a resonance inductor (Lₚ) in series with an assembly of two branches in parallel, each comprising a first switch (P₁₁ and P₁₂) respectively in series with a diode (d₁ and d₂), the two diodes being mounted head to tail, linked by a junction point (J) to the actuator (Aᵢ) **characterized in that** a second switch (P₂), mounted in anti-parallel with a diode (D) and delivering at its terminals a high AC voltage with DC component serving as excitation voltage is mounted in parallel to the actuator.

2. Device for controlling at least one ultrasound piezo-electric actuator according to Claim 1, **characterized in that** the resonance inductor (Lₚ) is mounted in series between the terminal (B+) of the voltage source (E) and the assembly of the two branches, itself linked by the junction point (J) to a first terminal of the second switch (P₂) mounted in anti-parallel with a diode (D), the other terminal of which is linked to the terminal (B-) of the voltage source, the actuator being mounted in parallel between the junction point (J) and the terminal (B-) of the source.

3. Device for controlling at least one ultrasound piezo-electric actuator according to Claim 1, **characterized in that** the resonance inductor (Lₚ) is mounted in series between the terminal (B+) of the voltage source and a first terminal of the second switch (P₂) mounted in anti-parallel with the diode (D), the second terminal of which is linked by the junction point (J) to a first terminal of the assembly of the two branches, the other terminal of which is linked to the terminal (B-) of the voltage source, the actuator being mounted in parallel between the junction point between the inductor (Lₚ) and the switch on the one hand and the junction point (J) on the other hand.

4. Device for controlling at least one ultrasound piezo-electric actuator according to one of Claims 1, 2 or 3, **characterized in that** the resonance inductor (Lₚ) is dimensioned for its resonance frequency with the input capacitance of the piezo-electric actuator (Aᵢ) to be greater than the recurrence frequency of the switches, or the ultrasound control frequency of the piezo-electric injectors.

5. Device for controlling at least one ultrasound piezo-electric actuator according to one of Claims 1 to 4, **characterized in that**, for the control of four ceramic piezo-electric actuators (A₁ to A₄), the latter are mounted in parallel with the terminals of the second switch (P₂) in anti-parallel with the diode (D), each being linked to a selection switch (S₁ to S₄) controlled by the electronic motor control computer which chooses the injector to be excited for it to inject the fuel into the determined cylinder.

6. Device for controlling at least one ultrasound piezo-electric actuator according to one of the preceding claims, **characterized in that** the DC voltage source is a 12 or 42 volt low-voltage battery or an alternator.

7. Device for controlling at least one ultrasound piezo-electric actuator according to one of the preceding claims, **characterized in that** the switch (P₂) delivering an excitation voltage (Vₚᵢ) to the actuator connected to its terminals is of the MOSFET type with intrinsic diode or of the IGBT or transistor type.

8. Method of implementing a device for controlling at least one ultrasound piezo-electric actuator according to Claims 1 to 6, **characterized in that**, to obtain an AC voltage with DC component at the terminals of the piezo-electric injector, the control computer performs the following steps:
- A) simultaneous closure of a first switch (P₁₁) of a branch of the assembly connected to the resonance inductor (Lₚ) on the one hand and of the second switch (P₂) intended to deliver the excitation voltage to the injector on the other hand for the current (I_{Lp}) to circulate in the inductor and for the energy to be accumulated in the latter, when the other first switch (P₁₂) of the other branch is open;
- B) opening of the second switch (P₂) when the first switch (P₁₁) of a branch is still closed and that (P₁₂) of the other branch is still open, in order for the current (I_{Lp}) in the inductor to pass into the selected actuator (Aᵢ) and for the inductor (Lₚ) to enter into resonance with the input capacitor of the actuator which will thus be charged at the excitation voltage (Vₚᵢ) existing at the terminals of the switch (P₂);
- C) opening of the first switch (P₁₁) of the branch that was closed and simultaneous closure of the switch (P₁₂) of the other branch, while the second switch (P₂) remains open, to discharge the piezo-electric actuator into the inductor (Lₚ), the current (I_{Lp}) of which increases in the direction opposite to the charging current;
- D) closure of the second switch (P₂), while one of the first switches of the branches (P₁₁) is open and the other switch (P₁₂) is closed;
- E) opening of the switch (P₁₂) that is closed and closure of the other switch (P₁₁) that is open of the two branches to accumulate energy in the inductor (Lₚ).

## Patentansprüche

1. Vorrichtung zur Steuerung mindestens eines piezoelektrischen Ultraschallaktuators, der von einem Steuergerät und einer Gleichspannungsquelle elektronisch gesteuert wird, wobei die Vorrichtung von der Spannungsquelle versorgt wird, die zwischen zwei Endanschlüssen (B-, B+) eine Ausgangsgleichspannung (E) abgibt, und eine mit diesen Anschlüssen parallel geschaltete Resonanzinduktivität (Lₚ) umfasst, die mit einem Satz aus zwei parallel geschalteten zweigen in Reihe geschaltet ist, jeder umfassend einen ersten Schalter (P₁₁ und P₁₂), der jeweils mit einer Diode (d₁ und d₂) in Reihe geschaltet ist, wobei die zwei Dioden entgegengesetzt angeordnet sind, durch eine Verbindungsstelle (J) mit dem Aktor (Aᵢ) verbunden sind, **dadurch gekennzeichnet, dass** ein zweiter Schalter (P₂), der mit einer Diode (D) antiparallel geschaltet ist und an seinen Anschlüssen eine Wechselhochspannung mit Gleichstromkomponente abgibt, die als Erregungsspannung dient, mit dem Aktor parallelgeschaltet ist.

2. Vorrichtung zur Steuerung mindestens eines piezoelektrischen Ultraschallaktuators nach Anspruch 1, **dadurch gekennzeichnet, dass** die Resonanzinduktivität (Lₚ) zwischen dem Anschluss (B+) der Spannungsquelle (E) und dem Satz der zwei Zweige in Reihe geschaltet ist, der seinerseits durch die Verbindungsstelle (J) mit einem ersten Anschluss des zweiten Schalters (P₂) verbunden ist, der mit einer Diode (D) antiparallel geschaltet ist, deren anderer Anschluss mit dem Anschluss (B-) der Spannungsquelle verbunden ist, wobei der Aktor zwischen der Verbindungsstelle (J) und dem Anschluss (B-) der Quelle parallel geschaltet ist.

3. Vorrichtung zur Steuerung mindestens eines piezoelektrischen Ultraschallaktuators nach Anspruch 1, **dadurch gekennzeichnet, dass** die Resonanzinduktivität (Lₚ) zwischen dem Anschluss (B+) der Spannungsquelle und einem ersten Anschluss des zweiten Schalters (P₂) mit der Diode (D) antiparallel geschaltet ist, deren zweiter Anschluss durch die Verbindungsstelle (J) mit einem ersten Anschluss des Satzes der zwei Zweige verbunden ist, dessen anderer Anschluss mit dem Anschluss (B-) der Spannungsquelle verbunden ist, wobei der Aktor zwischen der Verbindungsstelle zwischen der Induktivität (Lₚ) und dem Schalter einerseits und der Verbindungsstelle (J) andererseits parallel geschaltet ist.

4. Vorrichtung zur Steuerung mindestens eines piezoelektrischen Ultraschallaktuators nach einem der Ansprüche 1, 2 oder 3, **dadurch gekennzeichnet, dass** die Resonanzinduktivität (Lₚ) dimensioniert ist, damit ihre Resonanzfrequenz mit der Eingangskapazität des piezoelektrischen Aktors (Aᵢ) größer ist als die Wiederholungsfrequenz der Schalter, das heißt, die Ultraschall-Steuerfrequenz der piezoelektrischen Einspritzdüsen.

5. Vorrichtung zur Steuerung mindestens eines piezoelektrischen Ultraschallaktuators nach einem der Ansprüche 1 bis 4, **dadurch gekennzeichnet, dass** zur Steuerung der vier Aktoren aus piezoelektrischer Keramik (A₁ bis A₄) diese mit den Anschlüssen des zweiten Schalters (P₂) parallel geschaltet sind, der mit der Diode (D) antiparallel geschaltet ist, wobei jeder mit einem vom elektronischen Motorsteuergerät gesteuerten Wählschalter (S₁ bis S₄) verbunden ist, der die Einspritzdüse wählt, die erregt werden soll, damit sie den Kraftstoff in den jeweiligen Zylinder einspritzt.

6. Vorrichtung zur Steuerung mindestens eines piezoelektrischen Ultraschallaktuators nach einem der vorherigen Ansprüche, **dadurch gekennzeichnet, dass** die Gleichspannungsquelle eine 12 oder 42 Volt-Niederspannungsbatterie oder eine Lichtmaschine ist.

7. Vorrichtung zur Steuerung mindestens eines piezoelektrischen Ultraschallaktuators nach einem der vorherigen Ansprüche, **dadurch gekennzeichnet, dass** der Schalter (P₂), der eine Erregungsspannung (Vₚᵢ) an den mit seinen Anschlüssen verbundenen Aktor abgibt, vom Typ MOSFET mit eigenleitender Diode oder vom Typ IGBT oder Transistor ist.

8. Verfahren zum Betreiben einer Vorrichtung zur Steuerung mindestens eines piezoelektrischen Ultraschallaktuators nach einem der Ansprüche 1 bis 6, **dadurch gekennzeichnet, dass** das Steuergerät die folgenden Schritte durchführt, um an den Anschlüssen der piezoelektrischen Einspritzdüse eine Wechselspannung mit Gleichstromkomponente zu erzeugen:
- A) das gleichzeitige Schließen eines ersten Schalters (P₁₁) eines Zweigs des Satzes, der mit der Resonanzinduktivität (Lₚ) verbunden ist, zum einen, und des zweiten Schalters (P₂), der dazu bestimmt ist, eine Erregungsspannung an die Einspritzdüse abzugeben, zum anderen, damit der Strom (I_{LP}) in die Induktivität fließt und die Energie in dieser gespeichert wird, während der andere erste Schalter (P₁₂) des anderen Zweigs offen ist;
- B) das Öffnen des zweiten Schalters (P₂), während der erste Schalter (P₁₁) eines Zweigs noch geschlossen ist und der (P₁₂) des anderen Zweigs noch offen ist, damit der Strom (I_{LP}) in der Induktivität in den gewählten Aktor (Aᵢ) fließt und die Induktivität (Lₚ) mit der Eingangskapazität des Aktors in Resonanz tritt, der sich dadurch auf die Erregungsspannung (Vₚᵢ) lädt, die an den Anschlüssen des Schalters (P₂) vorliegt;
- C) das Öffnen des ersten Schalters (P₁₁) des Zweigs, der geschlossen war, und das gleichzeitige Schließen des Schalters (P₁₂) des anderen Zweigs, während der zweite Schalter (P₂) offen bleibt, um den piezoelektrischen Aktor in die Induktivität (Lₚ) zu entladen, deren Strom (I_{LP}) in entgegengesetzter Richtung zum Ladestrom zunimmt;
- D) das Schließen des zweiten Schalters (P₂), während einer der ersten Schalter der Zweige (P₁₁) offen ist und der andere Schalter (P₁₂) geschlossen ist;
- E) das Öffnen des geschlossenen Schalters (P₁₂) und Schließen des anderen, offenen Schalters (P₁₁) der zwei Zweige, um in der Induktivität (Lₚ) Energie zu speichern.
